Europäisches Patentamt

European Patent Office

Office européen des brevets

(11) Publication number: 0 260 745
A1

## (12) EUROPEAN PATENT APPLICATION

(21) Application number: 87201709.0

(22) Date of filing: 10.09.87

(51) Int. Cl.⁴: H04B 9/00

(30) Priority: 17.09.86 NL 8602350

(43) Date of publication of application:
23.03.88 Bulletin 88/12

(84) Designated Contracting States:
DE FR GB IT NL SE

(71) Applicant: N.V. Philips' Gloeilampenfabrieken
Groenewoudseweg 1
NL-5621 BA Eindhoven(NL)

(72) Inventor: Mahon, Cathal John
c/o INT. OCTROOIBUREAU B.V. Prof.
Holstlaan 6
NL-5656 AA Eindhoven(NL)
Inventor: Khoe, Giok Djan
c/o INT. OCTROOIBUREAU B.V. Prof.
Holstlaan 6
NL-5656 AA Eindhoven(NL)

(74) Representative: Peters, Rudolf Johannes et al
INTERNATIONAAL OCTROOIBUREAU B.V.
Prof. Holstlaan 6
NL-5656 AA Eindhoven(NL)

(54) **Device for optical heterodyne detection of an optical signal beam and optical transmission system provided with such a device.**

(57) In a heterodyne detector the radiation of the local oscillator (32) is modified by an element (33) to influence the state of polarisation so that the ratio of the intensities of two orthogonally polarised components is equal to the corresponding ratio in the signal beam. The radiation of the local oscillator and of the signal beam is combined in a coupler (35), subsequently split into the two orthogonally polarised components in the polarisation splitter (37) and then detected in two opto-electric converters (41, 42). The output signals (43, 44) thereof are combined in an electronic circuit (45) in which in addition to the end signal (47) a control signal (46) for the element (33) to influence the state of polarisation is generated. The signal-to-noise ratio in the end signal (47) can be maintained at substantially the optimum value by means of a controllable element (33) to influence the state of polarisation and having a limited control range.

FIG.4

EP 0 260 745 A1

## Device for optical heterodyne detection of an optical signal beam and optical transmission system provided with such a device.

The invention relates to a device for optical heterodyne detection of an optical signal beam, comprising a local oscillator, a polarisation-sensitive beam splitter for splitting the signal beam into two orthogonally polarised components, an element for combining radiation of the signal beam with radiation of the local oscillator, and two opto-electric converters which are arranged in the radiation paths of the two orthogonally polarised components, respectively.

The invention also relates to an optical transmission system provided with such a detection device.

A device of this type is known from British Patent Application no. 2,110,895 laid open to public inspection. As compared with direct detection of a signal beam, heterodyne detection provides considerable advantages relating to the signal-to-noise ratio and the discrimination of background radiation. The principle of heterodyne detection of optical radiation has been described extensively in the Article "Optical Heterodyne Detection" by O.E. DeLange in the journal "IEEE Spectrum" of October 1968, pages 77-85. As is stated in this Article it is important that the polarisation states of the modulated signal beam and the local oscillator beam correspond as much as possible. To achieve this a polarisation control is necessary, because optical transmission systems use optical waveguides or optical fibres, which have a disturbing influence on the state of polarisation of the radiation propagating therein. These fibres, which may be several dozen to several hundred kilometres long, are subjected to uncontrollable external influence such as temperature and pressure variations so that the disturbance of the polarisation state may vary in time. A signal beam linearly polarised at the input of a transmission fibre will generally be distorted at the output to an elliptically polarised beam whose ellipticity and direction of the major axis vary in time.

The above-cited British Patent Application no. 2,110,895 describes a detection device in which the signal beam is split into two orthogonally and linearly polarised components each of which is separately combined with a beam which originates from the local oscillator and is brought to the corresponding linear polarisation state. The pairs of combined components are subsequently detected and the output signals of the detectors used are combined electronically. The signal-to-noise ratio in the combined signal is, however, dependent on the intensity of the two linearly polarised components in the signal beam. Due to the variations in the state of polarisation of this beam the signal-to-noise ratio also undergoes variations, even if the total intensity remains equal.

It is an object of the invention to provide a device for heterodyne detection of an optical signal beam in which the signal-to-noise ratio can be maintained at the theoretical optimum for the transmitted power in the signal beam.

To this end a device according to the invention is characterized in that an element to influence the state of polarisation is arranged in the radiation path of the local oscillator beam, which element influences the state of polarisation of the radiation passing therethrough in dependence upon a control signal derived from the output signal of the two opto-electric converters so that the local oscillator beam is brought to a state of polarisation whose ratio between the amplitudes of the orthogonally polarised components is substantially equal to the comparable ratio of the radiation in the signal beam.

As will be explained hereinafter, the signal-to-noise ratio of the combined signal is independent of the state of polarisation of the signal beam when using the invention. An advantage of great practical value in this device is that only the ratio between the amplitudes of the polarised components and not the phase difference between the components is important. This provides the possibility of controlling the state of polarisation of the local oscillator beam by means of a limited range control, which from a constructive point of view has advantages with respect to an endless control. Controllable elements influencing the state of polarisation are known, for example, from the Article "Polarisation-State Control Schemes for Heterodyne or Homodyne Optical Fiber Communications" by T. Okoshi in the journal "IEEE Journal of Lightwave Technology" Vol. LT-3, no. 6, December 1985, pages 1232-1237. In the device according to the invention a limited range state of polarisation control can be used while a signal-to-noise ratio of substantially the theoretical optimum can be maintained in spite of variations in the polarisation state in the signal beam. It is noted that it is known from the contribution by T. Okoshi et al., entitled "Polarisation Diversity Receiver for H + eterodyne/Coherent Optical Fiber Communications" at the "Fourth International Conference on Integrated Optics and Optical Fiber Communications" held in Tokyo in 1983 (IOOC '83) pages 386-387 of the report, to place a Faraday rotator in the radiation path of the signal beam with which the state of polarisation of the signal beam is rotated in such a way that after splitting of the signal beam into two orthogonally polarised components both components have the same intensity. These components are combined with the correspondingly polarised components of a beam originating from a local oscillator. Since the electric current through a Faraday rotator cannot be increased to an unlimited extent so that this rotator can rotate the polarisation direction only over a limited range, the signal-to-noise ratio can be maintained at the optimum value only in the case of limited variations of the state of polarisation, unless interruptions in the control and consequently a temporary signal loss are accepted.

It is also to be noted that it is known that it is known per se from the Patents Abstracts of Japan, Vol. 9, No. 178 (E-330) (1901) Kokai no. 60-47524 to arrange a polarisation modulator in the radiation path of the local oscillator beam in an optical coherent receiver. However, in the known optical receiver the beamsplitting and beam-combining elements are combined in one polarisation-sensitive beam splitter so that the combined components of the signal beam and of the local oscillator beam have a mutually perpendicular direction of polarisation. Therefore it is necessary to arrange polarisation filters in the radiation paths of the combined beam components. These polarisation filters inevitably cause a loss of signal radiation and consequently this leads to a reduction of the signal-to-noise ratio.

A first embodiment of the device according to the invention is characterized in that it comprises two polarisation-sensitive beam splitters and two beam-combining elements, in that the first polarisation-sensitive beam splitter is arranged in the radiation path of the signal beam, in that the second polarisation-sensitive beam splitter is arranged in the radiation path of the beam emerging from the element to influence the state of polarisation, in that the first beam-combining element combines the first corresponding beam component from the two polarisation-sensitive beam splitters, in that the second beam-combining element combines the second corresponding beam component from the two polarisation-sensitive beam splitters and in that the two opto-electric converters are arranged in the respective radiation paths of the combined beams.

A second embodiment of the device according to the invention is characterized in that it comprises one beam-combining element and one polarisation-sensitive beam splitter, in that the beam-combining element is arranged in the radiation paths of the signal beam and of the beam emerging from the element to influence the state of polarisation, and in that the polarisation-sensitive beam splitter is arranged between the beam-combining element and the two opto-electric converters. In this embodiment disturbances which influence the polarisation states of the beams which have been combined and split into components have an equal influence on the radiation originating from the signal beam and from the local oscillator. In the detection device optical fibres can thus be used which do not ensure that the state of polarisation is preserved, but which provide the possibility of a compact structure of the detection device and low radiation losses in the various optical elements.

This embodiment of the device according to the invention is preferably further characterized in that the beam-combining element is a directional fibre-optic coupler. With this element a combination of the signal beam and of the local oscillator beam can be established without coupling losses at the entrance and exit faces of the coupler.

A device according to the invention may be further characterized in that the radiation paths of radiation emerging from two outputs of a beam-combining element accommodate polarisation-sensitive beam splitters, in that each of the radiation paths of the beam components emerging from the polarisation-sensitive beam splitters accommodates an opto-electric converter and in that the output signals of the converters in the radiation paths of equally polarised components are combined in differential amplifiers. By using balanced detection substantially all radiation entering a radiation-combining element is ultimately detected. The beam-combining element is preferably formed in such a manner that radiation of each of the two inputs is equally distributed over the two outputs.

The invention also relates to an optical transmission system comprising a radiation source unit for generating a linearly polarised signal beam modulated with an information signal, an optical transmission fibre transmitting the signal beam and a detection device reducing the carrier frequency of the signal beam. This optical transmission system according to the invention is characterized in that the detection device is a device for optical heretodyne detection of a signal beam in accordance with any one of the above-mentioned embodiments. The radiation source unit comprises, for example, a semi-conductor laser making it possible to generate a frequency-modulated signal beam by modulating the current passed therethrough. Alternatively, the radiation source unit may comprise a separate modulator for phase-or frequency-modulation of the signal beam.

The invention will now be described in greater detail by way of example with reference to the accompanying drawings in which

Fig. 1 shows a known method of heterodyne detection of a signal beam,

Fig. 2 shows the method of heterodyne detection according to the invention,

Figs. 3a and 3b show diagrammatically two possibilities according to the invention with which the state of polarisation of the local oscillator beam can be influenced when changing the polarisation state of the signal beam,

Fig. 4 shows diagrammatically an embodiment of a detection device according to the invention,

Fig. 5 shows an embodiment of a device according to the invention using balanced detection and

Fig. 6 shows diagrammatically an optical transmission system according to the invention.

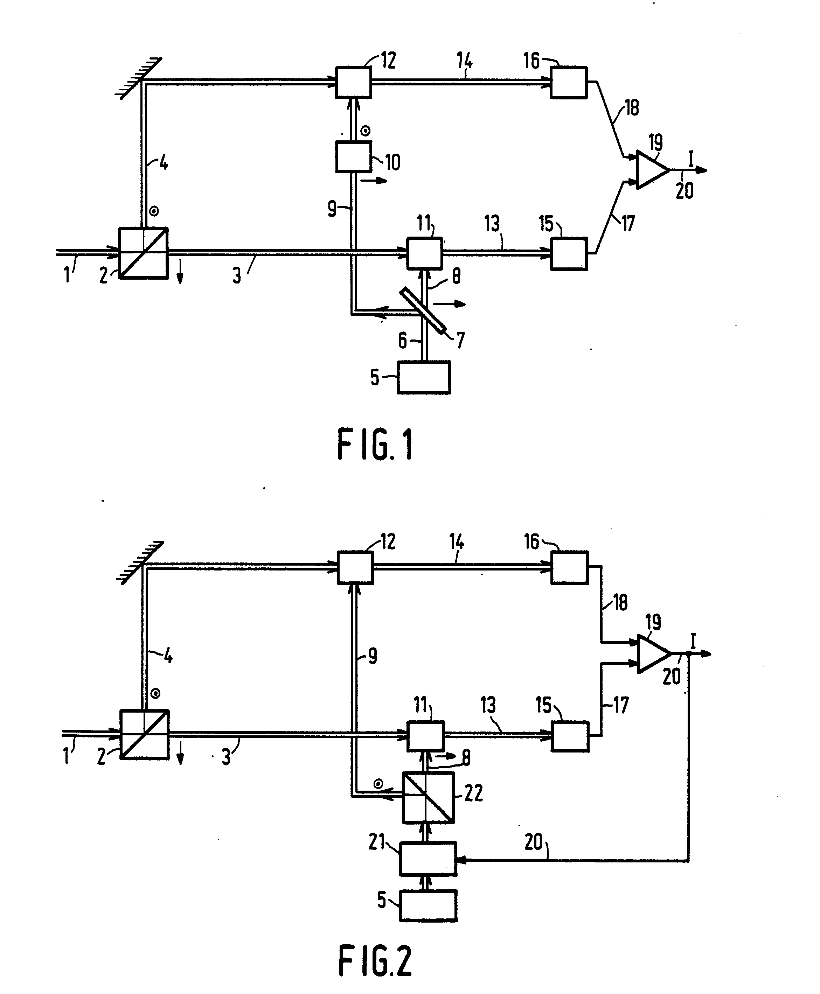

In Fig. 1 the reference numeral 1 denotes an optical signal beam which is split into two linearly polarised components 3 and 4 by the polarisation splitter cube 2, with, for example 3 being polarised horizontally and 4 being polarised vertically which is denoted by an arrow in the plane of the drawing and by an arrow perpendicularly to the plane of the drawing, respectively. A local oscillator 5 emits a linearly and horizontally polarised beam 6 which is split by a neutral beam splitter 7, for example a semitransparent mirror, into two likewise horizontally polarised beams 8 and 9. The horizontally polarised beams 3 and 8 are combined in the beam-combining element 11 to a composite beam 13. The beam 9 passes through a polarisation-rotating element 10, for example a $\lambda/2$ plate placed in a diagonal position so that the beam is polarised vertically. Subsequently this beam is combined in the beam-combining element 12 with the vertically polarised component 4 of the signal beam to a composite beam 14.

The two composite beams 13 and 14 are detected by means of two opt-electric converters 15 and 16. As described in the above-cited Article by O.E. DeLange in the journal "IEEE Spectrum" of October 1968, pages 77-85 the beams 13 and 14 can be considered to be composed of a number of frequency components one of which has a frequency which is equal to the difference of the frequencies of the signal beam and of the local oscillator beam. The other components have frequencies which are approximately twice the frequencies of the last-mentioned beams. The opto-electric converters 15 and 16 are not capable of following these high-frequency components but they can follow the difference component. The high-frequency components give rise to a d.c. component in the output signal. The modulation of the signal beam is transferred to the difference component so that the electrical output signals 17 and 18 have a a.c. components whose modulation corresponds to the modulation of the signal beam. The circuit 19 combines the signals 17 and 18 to a final signal 20.

As stated in the Article by O.E. DeLange it holds for the signal-to-noise ratio of an ideal heterodyne detector, that is to say, a detector in which the electrical field vectors of the signal beam and of the local oscillator beam are in the same plane:

$$\frac{S}{N} = \frac{\alpha\, P_s}{q\, b} \qquad (1)$$

wherein $\alpha$ is the opto-electrical conversion constant,
$p_s$ is the detected power in the signal beam
$q$ is the electron charge, and
$b$ is the bandwidth of the opto-electric converter.

The signal-to-noise ratio which is obtained with the above described known heterodyne detection device can be determined as follows:

The instantaneous value of the alternating current is the output signal 20 of the combination circuit 19 is:

$$i = \alpha\, (E_{ox}E_{sx} + E_{oy}E_{sy})\, \cos\,(\omega_o - \omega_s)t \qquad (2)$$

wherein $E_{ox}, E_{oy}$ represent the amplitudes of the electrical fields in the two polarisation directions and $_o$ is the frequency of the radiation of the local oscillator and $E_{sx}, E_{sy}$ and $_s$ denote the corresponding quantities of the radiation from the signal beam. As stated by O.E. DeLange, the noise in the case of a sufficient size of the signal from the local oscillator is approximately characterized by:
$i_N^2 = 2\alpha qbE_o^2$. Since the noise in the two detectors is uncorrelated, the noise level in the end signal 20 is equal to the sum of the noise in the two separate signals 17 and 18:

$$i_N^2 = \alpha\, qb\,(E_{ox}^2 + E_{oy}^2) \qquad (3)$$

The signal-to-noise ration then is:

$$\frac{S}{N} = \frac{i^2}{i_N^2} = \frac{\frac{1}{2}\propto^2(E_{ox}E_{sx} + E_{oy}E_{sy})^2}{\propto qb\ (E_{ox}^2 + E_{oy}^2)} \qquad (4)$$

In accordance with the known method the power of the local oscillator is distributed equally over the two polarisation directions, hence:

$$E_{ox}^2 = E_{oy}^2 = \frac{1}{2}E_o^2 = P_o.$$

Assuming that the power in the signal beam is distributed over the two polarisation components in the ratio a:(1-a), hence

$$E_{sx}^2 = aE_s^2 = 2aP_s$$

and

$$E_{sy}^2 = (1-a)E_s^2 = 2(1-a)P_s$$

it follows for the signal-to-noise ratio that:

$$\frac{S}{N} = \frac{\propto P_s}{2qb}\ (1+2\ \sqrt{a(1-a)}\ ) \qquad (5)$$

In the known method the signal-to-noise ration is dependent on the ratio in which the signal beam power is distributed over the two mutually perpendicularly polarised beam components. Since this ratio is influenced by external and uncontrollable factors which act on the waveguide for the signal beam, a signal-to-noise ratio having a variation in time must be taken into account in practice. The detection method as described in the above-cited contribution by T. Okoshi et al at IOOC '83 neither ensures an optimum signal-to-noise ratio under all circumstances.

Fig. 2 illustrates the detection method according to the invention. The layout of Fig. 2 is equal to that of Fig. 1 to which reference is made for the part not described hereinafter. The linearly polarised radiation beam 6 originating from the local oscillator 5 is passed through an element 21 influencing the polarisation state. The radiation emerging therefrom is split in the polarisation splitter cube 22 into two orthogonally and linearly polarised components 8 and 9 in which, which reference to Fig. 1, 8 is polarised horizontally and 9 is polarised vertically. The relative ratio of the amplitudes of the radiation in the beams 8 and 9 can be influenced by influencing the state of polarisation by means of the element 21. If the power in the beams 8 and 9 is distributed in the ratio of z:(1-z) and hence

$$E_{ox}^2 = zE_o^2 = 2zP_o \text{ and } E_{oy}^2 = (1-z)E_o^2 = 2(1-z)P_o\ ,$$

formula (4) for the signal-to-noise ratio can be rewritten as:

$$\frac{S}{N} = \frac{\propto P_s}{qb}\ (\ \sqrt{az}\ +\ \sqrt{(1-a)(1-z)}\ )^2 \qquad (6)$$

For z = $\frac{1}{2}$ this expression is reduced to formula (5). By simple substitution it is immediately evident that, if a and z are equal, the signal-to-noise ratio is equal to the theoretical optimum $\alpha P_s/qb$.

A change of the polarisation state of the signal beam implies a change of a, with z remaining equal. This results in a reduction of the magnitude of the output signal 20. By varying the value of z by means of the element 21 influencing the state of polarisation until the signal magnitude is maximum, the value of z can be kept substantially equal to that of a. This control is not shown in detail in the drawing.

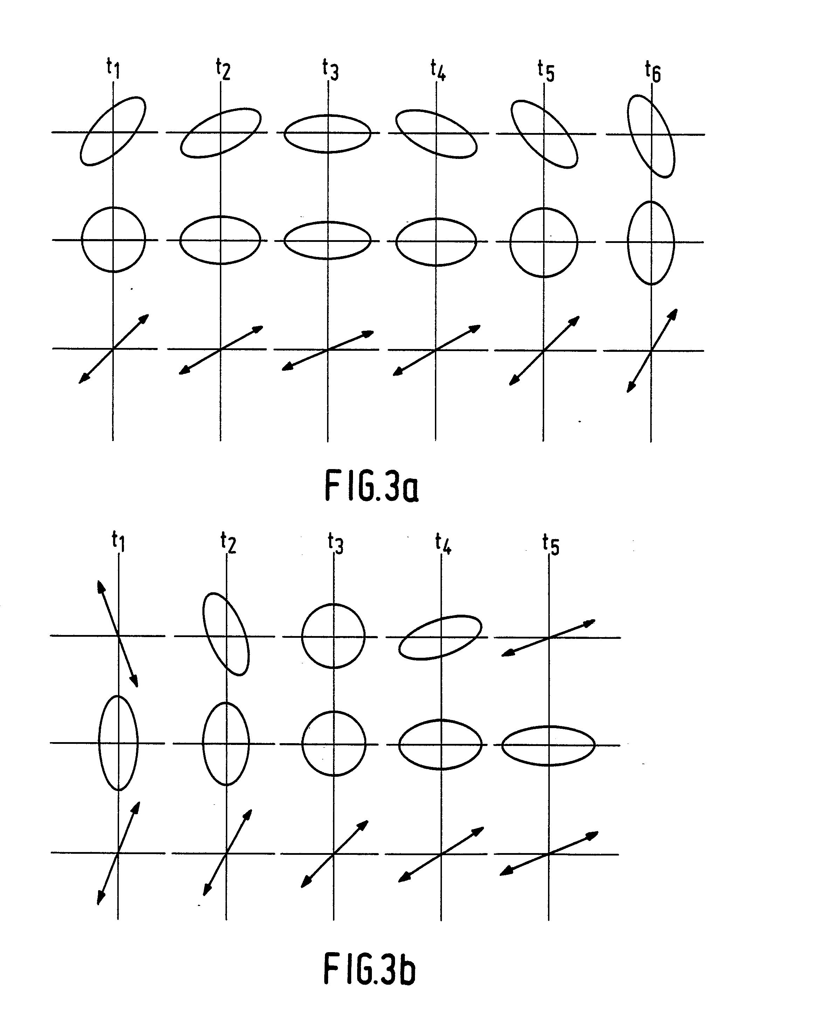

The upper parts of Figs. 3a and 3b show states of polarisation which the radiation in the signal beam can assume as a result of the external influences acting on the optical transmission fibre. The lower parts show possible polarisation states of the radiation of the local oscillator.

Fig. 3a shows the polarisation state of the signal beam at six not necessarily equidistant points of time $t_1$ to $t_6$. The signal beam is elliptically polarised with an equal ellipticity at each instant. The major axis of the ellipse is rotated clockwise through 22.5° from one instant to the next. Below each of the states of polarisation for the signal beam shown, the central part and the lower part show two possible states of polarisation for the beam of radiation originating from the local oscillator which can be combined with the signal beam in order to achieve an optimum heterodyne detection. The central series of diagrams shows possible deformations of the polarisation of this beam of radiation which is in principle elliptical. The orientation of the two ellipse axes remains the same, but only the length of the two axes is varied.

The lower series of diagrams shows how the invention can be used with a linearly polarised beam of the local oscillator. By changing the direction of polarisation the ratio between the horizontal and the vertical components can be modified. The latter series of diagrams also illustrates that the direction of polarisation need only be varied over a limited range.

Fig. 3b shows how the state of polarisation of the signal beam can vary in a different manner. The points of time $t_1$ to $t_5$ shown indicate transition phases from a linear state of polarisation via elliptical, circular and again elliptical polarisation to an orthogonal linear polarisation state. Similarly as indicated in Fig. 3a the central and the lower series of diagrams in this Figure show two manners in which the local oscillator can be corrected according to the invention. The central series of diagrams indicates how this is effected by adapting the ellipticity of the local oscillator radiation, whilst the lower series shows the rotation of the polarisation direction of the linearly polarised radiation from the local oscillator.

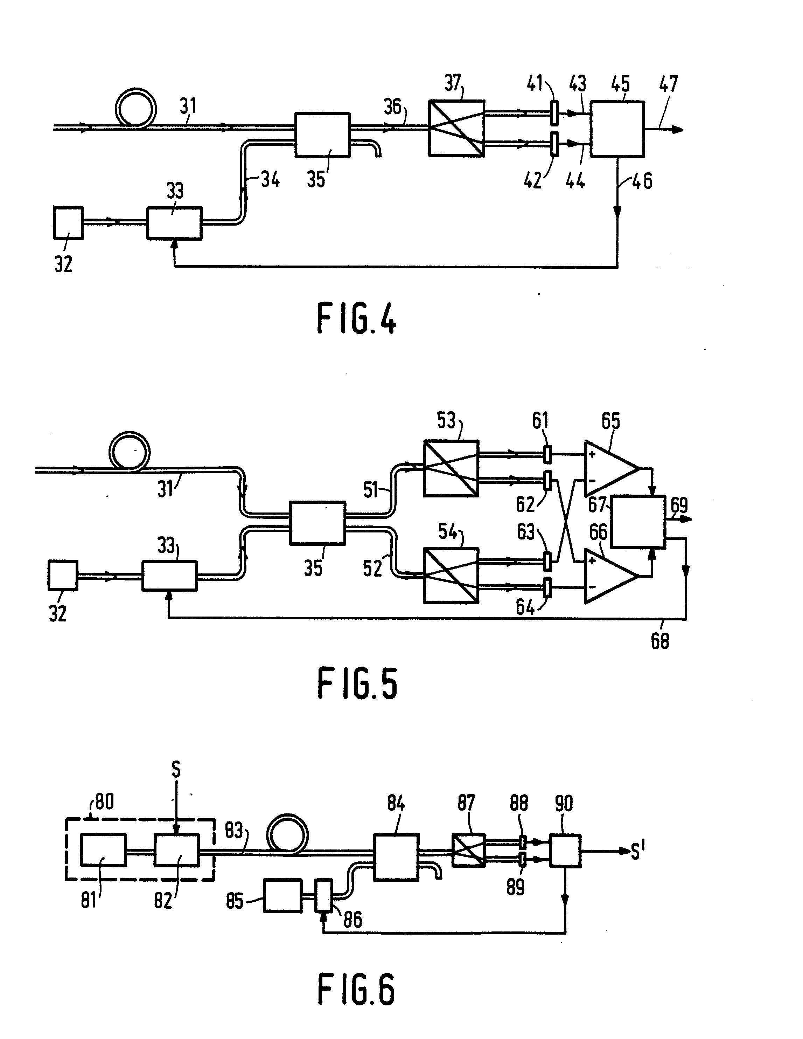

Fig. 4 shows diagrammatically an embodiment of a detection device. The reference numeral 31 denotes the end of a long-distance monomode optical transmission fibre through which an optical signal beam is transmitted. A local oscillator 32 generates optical radiation at a fixed polarisation state. This local oscillator is, for example, a semiconductor laser. The radiation beam originating from the local oscillator traverses an element 33 influencing the polarisation state, for example a Faraday rotator, an electro-optical crystal or a fibre squeezer which brings the beam to a state of polarisation in which the ratio of the intensities of the horizontal and the vertical components is equal to that of the corresponding components in the signal beam. The beam emerging from the element 33 is passed through the optical fibre 34 to the beam-combining element 35 where this beam is mixed with the signal beam. In order to prevent signal loss as much as possible, element 35 is preferably asymetric, that is to say, the combined radiation beam in the output 36 comprises a large portion of the signal radiation and only a small portion of the local oscillator radiation. In the drawing element 35 is shown as a directional fibre-optic coupler but this element may be alternatively, for example, a semitransparent mirror. The composite beam emerging from the element 35 is subsequently split in a polarisation-sensitive beam splitter 37, for example, a Wollaston prism, into a horizontally polarised component and a vertically polarised component. Each of the two components is separately detected in the opto-electric converters 41 and 42, for example, radiation-sensitive diodes. The output signals 43 and 44 of the converters are added to the circuit 45 which combines several functions. In the first place the output signals of the opto-electric converters are added together, if necessary after a phase correction, and they constitute the end signal 47. In the second place a control signal 46 is generated in the circuit 45 with which signal the adjustment of the element 33 influencing the state of polarisation is varied and is readjusted, if necessary, in order to compensate for changes in the state of polarisation of the signal beam.

Fig. 5 shows an alternative possibility of detecting the composite beam. In this case the radiation from the two outputs of the coupler is used. As in Fig. 3, the reference numeral 31 in Fig. 4 denotes the end of an optical fibre through which a signal beam is transmitted, the reference numeral 32 denotes a local oscillator, the reference numeral 33 denotes an element influencing the polarisation state and the reference numeral 35 denotes a beam-combining element. The radiation originating from the signal beam and from the local oscillator is preferably distributed equally over the two outputs 51 and 52 of the coupler. The radiation emerging from each of the two outputs is added to one of two polarisation-sensitive beam splitters 53 and 54, respectively, which splits the incoming radiation into two orthogonally polarised components which are detected in the opto-electric converters 61, 62, 63 or 64. The converters 61 and 63 detecting the horizontally polarised components add their output signals to the differential amplifier 65. The outputs of the converters 62 and 64 detecting the vertical components are connected to the inputs of the differential detector 66. Since beams from the two outputs 51 and 52 of the element 35 have opposite phases, the d.c. components of output signals of the converters are cancelled in the differential amplifiers 65 and 66 and the a.c. components are added together. The output signals of the differential amplifiers 65 and 66 are added to the combination and control circuit 67 which supplies a control signal 68 for the element 33 to influence the state of polarisation and a final signal 69.

Fig. 6 shows an optical transmission system in which the invention is used. A radiation source unit 80 comprises a radiation source 81, for example, a semiconductor laser which emits radiation which is modulated in the electro-optical modulator 82 with the information signal S. Alternatively, the radiation source unit may comprise a semiconductor laser as a radiation source in which the signal beam is frequency-modulated by changing the current which is passed through the laser. The optical signal is transmitted through the long-distance transmission fibre 83 to one of two inputs of the optic coupler 84. The other input of the coupler 84 is connected to the output of a local oscillator 85 via an element 86 to influence the state of polarisation. In the manner as described above the radiation from one of from both outputs of the coupler is split into horizontally polarised components and vertically polarised components by the polarisation-sensitive beam splitter 87. Each of the components is detected by one of the opto-electric converters 88 and 89. In the control and combination circuit 90 a control signal for the element 86 influencing the polarisation state and the output signal S' are determined from the output signals thereof.

## Claims

1. A device for optical heterodyne detection of an optical signal beam, comprising a local oscillator, a polarisation-sensitive beam splitter for splitting the signal beam into two orthogonally polarised components, an element for combining radiation of the signal beam with radiation of the local oscillator, and two opto-electric converters which are arranged in the radiation paths of the two orthogonally polarised components, respectively, characterized in that an element to influence the state of polarisation is arranged in the radiation path of the local oscillator beam, which element influences the state of polarisation of the radiation passing therethrough in dependence upon a control signal derived from the output signal of the two opto-electric converters so that the local oscillator beam is brought to a state of polarisation whose ratio between the amplitudes of the orthogonally polarised components is substantially equal to the comparable ratio of the radiation in the signal beam.

2. A device as claimed in Claim 1, characterized in that it comprises two polarisation-sensitive beam splitters and two beam-combining elements, in that the first polarisation-sensitive beam splitter is arranged in the radiation path of the signal beam, in that the second polarisation-sensitive beam splitter is arranged in the radiation path of the beam emerging from the element to influence the state of polarisation, in that the first beam-combining element combines the first corresponding beam component from the two polarisation-sensitive beam splitters, in that the second beam-combining element combines the second corresponding beam component from the two polarisation-sensitive beam splitters and in that the two opto-electric converters are arranged in the respective radiation paths of the combined beams.

3. A device as claimed in Claim 1, characterized in that it comprises one beam-combining element and one polarisation-sensitive beam splitter, in that the beam-combining element is arranged in the radiation paths of the signal beam and of the beam emerging from the element to influence the polarisation state, and in that the polarisation-sensitive beam splitter is arranged between the beam-combining element and the two opto-electric converters.

4. A device as claimed in Claim 3, characterized in that the beam-combining element is a directional fibre-optic coupler.

5. A device as claimed in Claim 1, 2, 3 or 4, characterized in that the radiation paths of radiation emerging from two outputs of a beam-combining element accommodate polarisation-sensitive beam splitters, in that each of the radiation paths of the beam components emerging from the polarisation-sensitive beam splitters accommodates an opto-electric converter and in that the output signals of the converters in the radiation paths of equally polarised components are combined in differential amplifiers.

6. An optical transmission system comprising a radiation source unit for generating a linearly polarised signal beam modulated with an information signal, an optical transmission fibre transmitting the signal beam and a detection device reducing the carrier frequency of the signal beam, characterized in that the detection device is a device for optical heterodyne detection of a signal beam as claimed in any one of the preceding Claims.

FIG.1

FIG.2

FIG.3a

FIG.3b

FIG.4

FIG.5

FIG.6

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | ELECTRONICS LETTERS, vol. 21, no. 2, 17th January 1985, pages 52-53, Stevenage, Herts, GB; T. IMAI et al.: "Optical polarisation control utilising an optical heterodyne detection scheme" * Figure 1 * | 1,5,6 | H 04 B 9/00 |
| Y | PATENT ABSTRACTS OF JAPAN, vol. 9, no. 178, 23rd July 1985, page 36 E 330; & JP-A-60 47 524 (NIPPON DENSHIN DENWA KOSHA) 14-03-1985 * Abstract * | 1,2 | |
| X | Idem | 6 | |
| Y | US-A-4 506 388 (MONERIE) * Figure 1 * | 1,2 | |
| E | WO-A-8 607 513 (BRITISH TELECOMMUNICATIONS PUBLIC LTD CO.) * Figure 1 * | 1,3,4,6 | TECHNICAL FIELDS SEARCHED (Int. Cl.4) H 04 B G 02 F |

The present search report has been drawn up for all claims

| Place of search | Date of completion of the search | Examiner |
|---|---|---|
| THE HAGUE | 27-11-1987 | GEISLER J.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document